# EUROPEAN PATENT APPLICATION

(11) **EP 4 365 029 A1**
(43) Date of publication of application: **08.05.2024**
(21) Application number: 23206965.8
(22) Date of filing: 31.10.2023
(51) Int. Cl.: B60Q 3/283, B60R 25/045, B60R 25/24, B60R 25/25, B60K 35/10, B60K 35/22, B60K 35/29, B60K 35/60

(54) **GESTURE DEVICE FOR TURNING ON A ROAD VEHICLE AND CORRESPONDING ROAD VEHICLE**

(30) Priority: 04.11.2022 IT 202200022734
(71) Applicant: FERRARI S.p.A., 41100 Modena (IT)
(72) Inventor: IVE, Jonathan P., SAN FRANCISCO, 94124 (US); WHANG, Eugene, SAN FRANCISCO, 94124 (US); BATAILLOU, Jeremy, SAN FRANCISCO, 94124 (US); ASHCROFT, Anthony, SAN FRANCISCO, 94124 (US); ZHOU, Suhang, SAN FRANCISCO, 94124 (US); LOUZAOUEN, Benoit, SAN FRANCISCO, 94124 (US); KISS, Jemima, SAN FRANCISCO, 94124 (US); WILSON, Christopher, SAN FRANCISCO, 94124 (US); WAN, Wan Si, SAN FRANCISCO, 94124 (US); NATERA, Biotz, SAN FRANCISCO, 94124 (US); MCGRATH, James, SAN FRANCISCO, 94124 (US); GUYETT, Roger, SAN FRANCISCO, 94124 (US); LUXTON, Joseph, SAN FRANCISCO, 94124 (US); MATAS, Michael, SAN FRANCISCO, 94124 (US); KESSLER, Patrick, SAN FRANCISCO, 94124 (US); ROMANI, Maximilian, 41100 MODENA (IT); CONIGLIARO, Vito, 41100 MODENA (IT)
(74) Representative: Studio Torta S.p.A.

(57) **Abstract**

Road vehicle (1) comprising an ignition system (6) for the powertrain system (5) comprising in turn a luminous device (7) integral with the passenger compartment (3) of the road vehicle (1) and comprising an optical sensor (9) configured to detect at least a first gesture and a second gesture performed by the driver to switch from an off configuration to an on configuration of the road vehicle (1) and vice versa; the luminous device (7) comprising a display device (27) configured to at least partially assume a first colour and a second colour; wherein the display device (27) is configured to switch from the first colour to the second colour when the movable part (9) switches from the off configuration to the on configuration and vice versa when the movable part (9) switches from the on configuration to the off configuration.

## Description

### CROSS-REFERENCE TO RELATED APPLICATIONS

This patent application claims priority from Italian patent application no. 102022000022734 filed on November 4, 2022, the entire disclosure of which is incorporated herein by reference.

### TECHNICAL FIELD

The present invention relates to a gesture device for turning on a road vehicle and to a relative road vehicle.

In particular, the present invention has an advantageous, but not exclusive, application in a gesture device for turning on a high-performance road vehicle, to which the description that follows will refer explicitly, but without thus losing its general nature.

### CONTEXT OF THE INVENTION

As known, over recent years, totally electric vehicle systems have increasingly been gaining a foothold, meaning those with a powertrain system provided exclusively with one or more electric motors, aimed at placing an ever-increasing distance between the automobile market and the fossil fuels on which it is still heavily dependent.

These vehicles, since they do not have an internal combustion engine, no longer need the so-called "key cycle", meaning the entire electromechanical procedure that leads to ignition of the combustion engine, such as by means of a starter motor.

In light of what has been said, in certain cases, totally electric vehicles have been developed that are configured to switch on (i.e., to activate the powertrain system and allow the gear to be engaged) automatically as soon as the presence of the vehicle key inside the passenger compartment is detected.

However, in such electric vehicles, it is basically impossible to switch off the vehicle when the driver is inside it, as it remains active and ready to depart for as long as the key is detected inside the passenger compartment. This leads to an excessive and unnecessary consumption of energy in the case of lengthy periods spent inside the vehicle, with a consequent greater wear of the electronic components responsible for supplying power to the powertrain system.

In contrast, however, vehicles have been developed on which, in order to assist drivers accustomed to the "key cycle", an ignition button of the road vehicle is present which (always after the key has been detected inside the passenger compartment) allows power supply to the powertrain system to be activated manually and therefore the vehicle to start. In these cases, however, in the case of totally electric vehicles, due to their silence, it is not immediately clear to the driver whether the vehicle is switched on and ready to depart, or whether it is necessary to press the button. In any case, on such vehicles, it is nonetheless necessary to press on the brake pedal at the same time, failing which the powertrain system will not switch on.

In general, there is a need to lengthen the autonomy of the electric road vehicle, and, at the same time to inform the driver of the state of ignition of said road vehicle in a simple and immediate manner.

Document KR20170119224 describes a display device comprising a display, a video camera and a processor that detects the palm of the user's hand on the basis of a video camera image.

Document US2012050010 describes a video camera external to a vehicle that receives an image of a portion of the driver's arm, such as the palm of the hand, highlighting the models of the blood transfer routes, such as the veins, inside the exposed portion of the driver's palm.

Document EP3335943 describes a biometric switch comprising a switching body having a surface with a portion configured to be gripped by the user's hand.

Document EP3184348 describes a light emitting unit configured to emit light, a tactile sensor configured to detect a touch and a processor configured to control the light emitting unit and generate the light in response to an event.

Document WO2022214906 describes a vehicular control device with a high safety level.

### DESCRIPTION OF THE INVENTION

The object of the present invention is to provide a gesture device for turning on a road vehicle and a relative road vehicle that are at least partially free from the problems described here above and, at the same time, are simple and cheap to manufacture.

According to the present invention, a gesture device for turning on a road vehicle and a relative road vehicle are provided according to what is claimed in the independent claims that follow and, preferably, in any one of the claims that are directly or indirectly dependent upon the independent claims.

The claims describe preferred embodiments of the present invention and form an integral part of this description.

### BRIEF DESCRIPTION OF THE DRAWINGS

Several embodiments of the invention will be described below for a better understanding of it, by way of non-limiting example and with reference to the attached drawings, wherein:
- Figure 1 is a perspective and schematic view, with parts removed for clarity, of a possible embodiment of a road vehicle according to the present invention;
- Figure 2 is a perspective and schematic view of part of the interior of the passenger compartment of a first embodiment of the vehicle of Figure 1 in a switched-off configuration;
- Figure 3 is a perspective and schematic view of part of the interior of the passenger compartment of the vehicle of Figure 1 in a first switched-on configuration;
- Figure 4 is a perspective and schematic view of part of the interior of the passenger compartment of the vehicle of Figure 1 in a second switched-on configuration;
- Figure 5 is a perspective and schematic view of part of the interior of the passenger compartment of the vehicle of Figure 1 in a third switched-on configuration;
- Figure 6 is a perspective and schematic view of part of the interior of the passenger compartment of the vehicle of Figure 1 in a fourth switched-on configuration;
- Figure 7 is a perspective and schematic view of part of the interior of the passenger compartment of the vehicle of Figure 1 in a switched-on configuration before switching to the switched-off configuration of Figure 2; and
- Figure 8 is a perspective and schematic view of the vehicle of Figure 7 in a respective switched-off configuration.

### EMBODIMENTS OF THE INVENTION

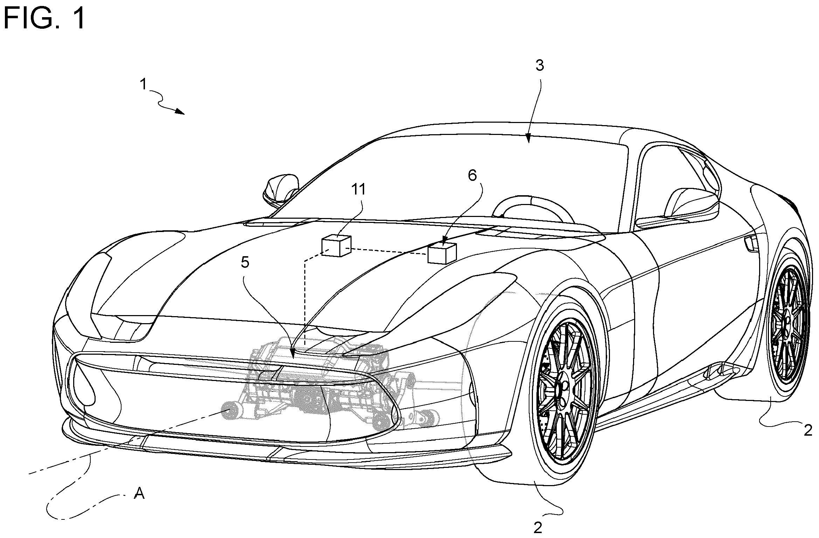

In Figure 1, number 1 indicates as a whole a road vehicle provided with two front wheels 2 and two rear wheels 2 (in particular drive wheels). The vehicle 1 is provided with a passenger compartment 3 that is apt to accommodate at least a driver and preferably one or more passengers.

The same reference numbers and reference letters in the figures identify the same elements or components with the same function.

In this description, the term "second" component does not imply the presence of a "first" component. Such terms are, in fact, adopted as labels to improve clarity and should not be intended as limiting.

The elements and features illustrated in the different preferred embodiments, including the drawings, may be combined with or isolated from each other without deviating from the scope of protection of this application as described below.

Furthermore, the road vehicle 1 comprises a chassis (of a known type and therefore not illustrated in detail), and a vehicle dashboard 4 inside the passenger compartment and attached to the chassis. The vehicle dashboard is arranged in front of the driver and the passenger, if any.

In detail, and not in a limiting manner, the road vehicle 1 is an entirely electric vehicle, i.e., provided with a rechargeable battery pack (of a known type and therefore not further detailed below).

In particular, the road vehicle 1 comprises a powertrain system 5, which is provided with at least an electric motor and circuitry dedicated to power supply and control of said motor and of the battery pack.

The road vehicle 1 also comprises an ignition system 6 of the powertrain system 5. In other words, the ignition system 6 is configured to perform the known functions of "key-on" and "key-off", i.e., switching on and switching off the powertrain system 5. In particular, the ignition system 6 is configured to enable power supply from the battery pack to the powertrain system 5.

The ignition system 6 preferably comprises a gesture device 7 (integrated into the road vehicle 1 and not removable) and configured to detect at least a first gesture and a second gesture performed by the driver respectively to enable and to disable power supply to the powertrain system 5.

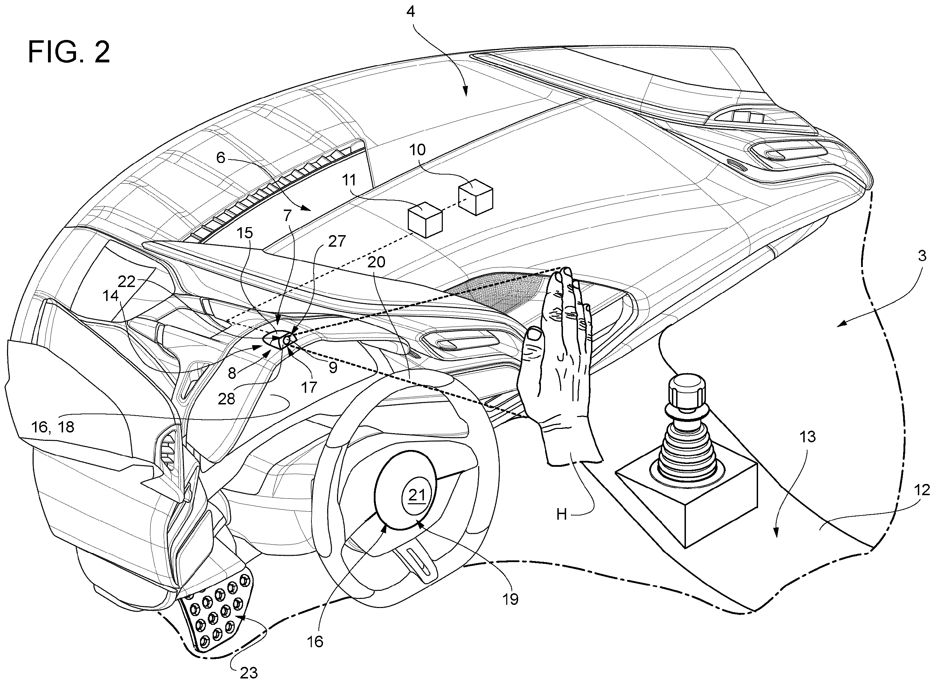

In the non-limiting embodiments of figures 2 attached, the luminous device 7 comprises a gesture detector 8.

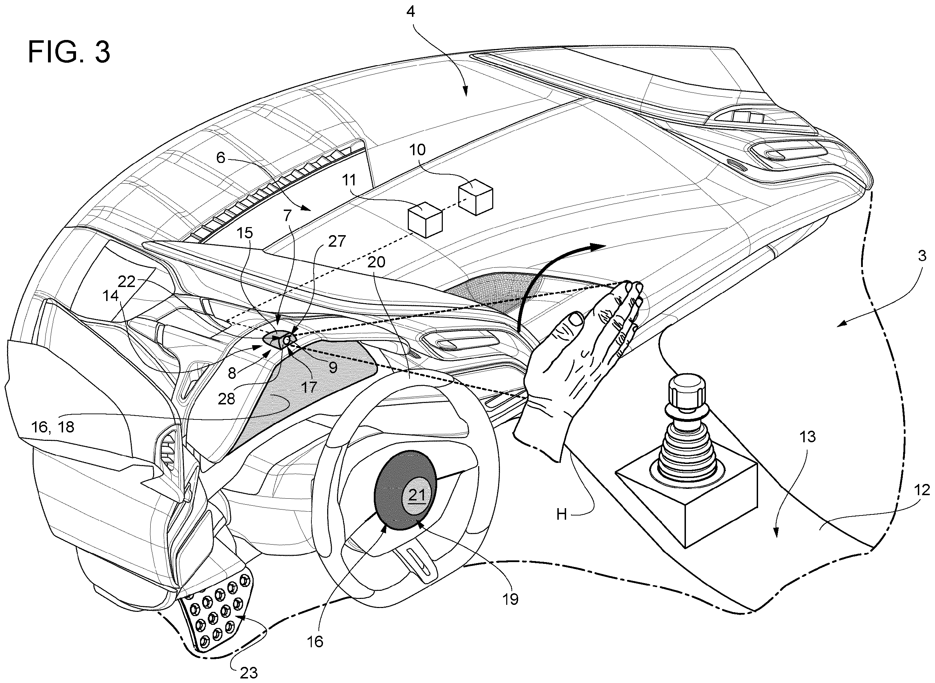

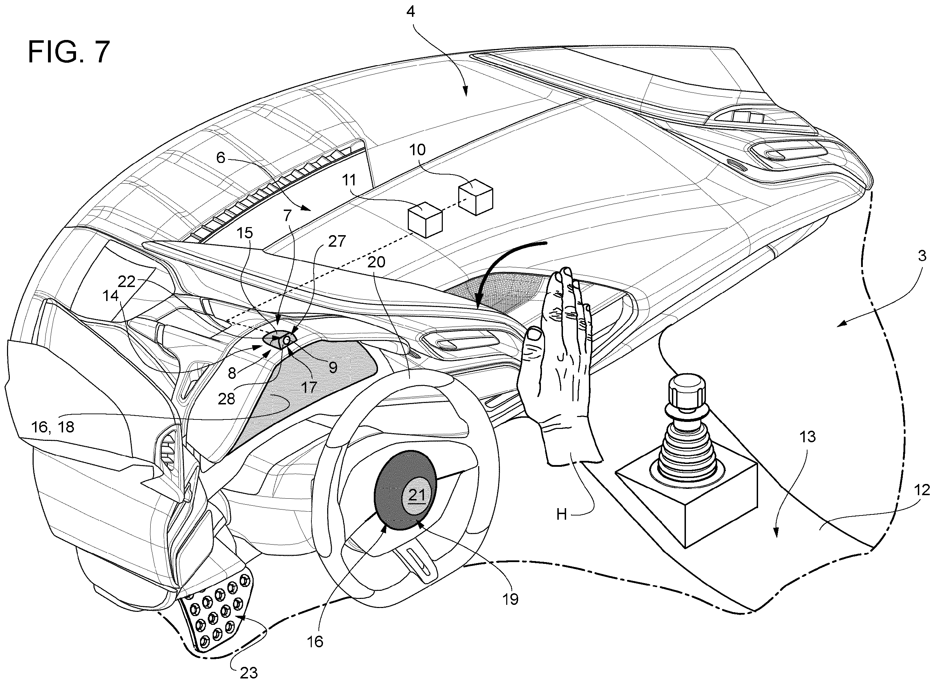

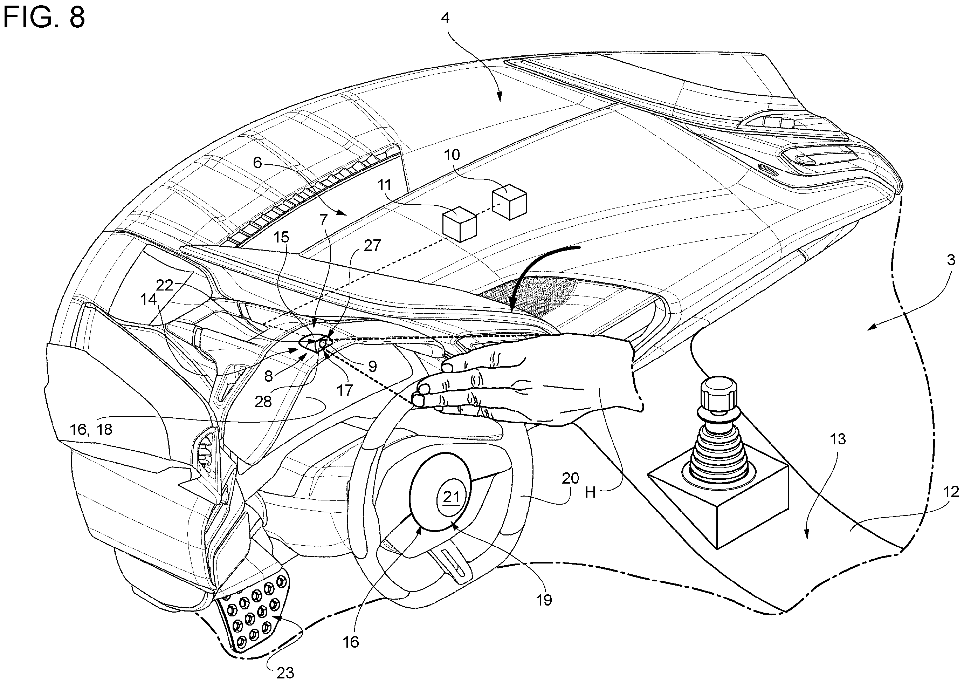

In the non-limiting embodiments of Figures 2 and 3, the gesture detector 8 comprises an optical sensor 9, in particular a video camera 15 configured to allow the system 6 to identify at least a first gesture (Figures 2 and 3) and a second gesture (Figures 7 and 8) performed by the driver respectively to enable and to disable power supply from the battery pack to the powertrain system 5.

Advantageously but not in a limiting manner, the ignition system 6 comprises a detection system 10 (preferably wireless, for example RFID, Wi-Fi or Bluetooth^{®}), which is configured to detect the presence or absence of a key (not illustrated, conventional or possibly integrated into a mobile telephone, into a ring, or into a bracelet) at (or in) the passenger compartment 3.

In addition, the ignition system 6, i.e., the road vehicle 1, comprises a control unit 11, which is connected to the detection system 10 and to the powertrain system 5 and is configured to enable (or disable) power supply from the battery pack to the powertrain system 5 exclusively when the gesture device 7 is operated (i.e., when the gesture detector 8 recognises the first gesture or the second gesture of the driver) while the key is detected in the passenger compartment 3. In other words, in contrast with what occurs in the prior art, it is not necessary to press the brake pedal simultaneously and the vehicle is not maintained constantly switched on, pointlessly, when it is not moving.

Physically, the control unit 11 may comprise a single device or several devices separate from each other and communicating by means of the local network (such as Ethernet or CAN) of the road vehicle 1. For example, the control unit 11 may also be delegated to perform further and different activities to ignition.

Preferably but not in a limiting manner, the gesture device 7, i.e., the gesture detector 8, is arranged at a vehicle roof 30, in particular facing towards/at a central ceiling light and facing towards the driver. In this manner, the driver of the road vehicle 1 can switch on and switch off the powertrain system 5 substantially without restrictions on direction, provided they make the first or the second gesture.

In other non-limiting embodiments, such as the one illustrated in Figures 2 to 8, the gesture device 7 is arranged at the dashboard 4, in particular on a central portion of the dashboard 4 (i.e., to the right of the steering column) or of a control panel 18, in a manner that the gesture device 7 is facing towards the driver in order to easily detect the first or the second gesture.

Advantageously but not in a limiting manner, the gesture detector 8 comprises a locking system 14 of the gesture device 7, which is configured to block the gesture device 7, i.e., to interrupt the detection of the video camera 15, in case the speed of the road vehicle 1 is greater than zero and/or a gear is engaged. In other words, in order to be able to switch from the switched-on configuration to the switched-off configuration, it is necessary for the vehicle to be standing still and in park mode (known as P). Therefore, if the driver performs the second gesture to switch off the powertrain system 5 while the vehicle 1 is moving, the ignition system 6, or the control unit 11, would not switch off the powertrain system 5, since the gesture detector 8 would be selectively disabled.

Advantageously but not in a limiting manner, the vehicle 1 comprises a luminous element 16 inside the passenger compartment 3 (in particular, at the dashboard 4), which is configured to assume a first colour (for example, grey or black) when the luminous device 7 is in the switched-off configuration and a second colour (for example, yellow or red) when the luminous device 7 is in the switched-on configuration.

In particular, the first colour and the second colour are different to each other. In this manner, the driver can immediately understand whether the powertrain system 5 is switched on/enabled or switched off/disabled (without looking away) from the colour of the luminous element 16.

At the same time and with the same criterion, advantageously but not in a limiting manner, the ignition system 6 (in particular, the control unit 11) is configured to change the colour of at least part 17 of the gesture device 7. In other words, the gesture device 7, as a function of the fact that it is in the switched-on configuration or in the switched-off configuration, changes colour at least in part 17.

Preferably but not in a limiting manner, the colour change controlled by the control unit 11 is from a third colour (for example, yellow or red) to a fourth colour (for example, black or grey), following operation of the gesture device 7, in particular of correct performance of the first gesture, and vice versa, or correct performance of the second gesture detected by the gesture device 7, to switch to the switched-off configuration.

Advantageously but not in a limiting manner, the third colour is equal to the second colour and the fourth colour is equal to the first colour. In this manner, substantially, in operating the luminous device 7, the driver perceives the change of colour from part 17 of the luminous device 7 of ignition to the rest of the road vehicle 1, in particular to the luminous element 16.

In certain, non-limiting cases, the luminous element 16 is part of a control panel 18.

In other cases, preferred but also non-limiting, the luminous element 16 is a part 19 of the steering wheel 20, in particular a surface 21 arranged at a front airbag 22 (driver side) .

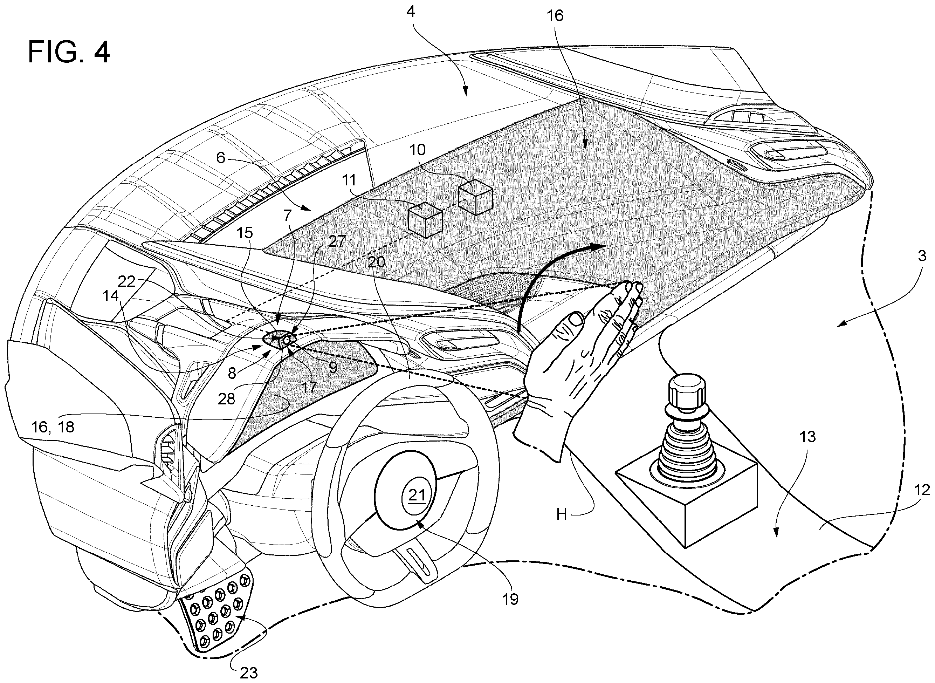

In the non-limiting embodiment of Figure 4, the luminous element 16 is a part of the dashboard 4, in particular any surface covering of the dashboard 4.

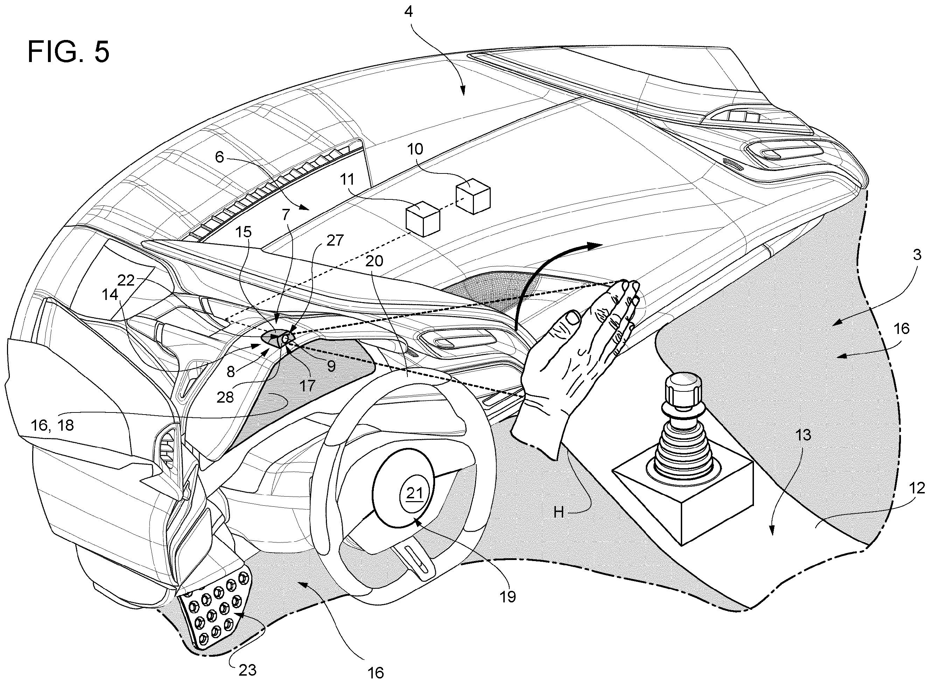

In the non-limiting embodiment of Figure 5, the luminous element 16 is the so-called "ambient lights", i.e. those devices that light the passenger compartment without disturbing driving (usually by means of indirect lighting), for example usually in the zone occupied by the legs of the driver or the passenger, or the contours of the buttons on the dashboard 4, or their backlights, or even luminous strips arranged on the slits of the coverings to light the passenger compartment in an indirect manner.

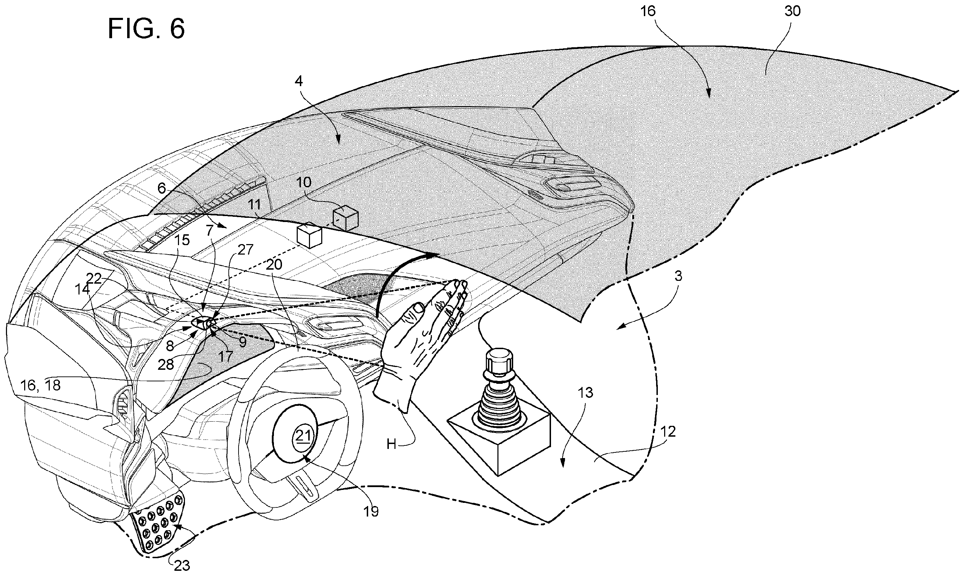

In the non-limiting embodiment of Figure 6, the luminous element 16 is a part of a vehicle roof 30, in particular any surface covering of the vehicle roof 30 inside the passenger compartment 3.

In further non-limiting cases, the third colour is equal to the first colour and the second colour is equal to the fourth colour. In this manner, in operating the luminous device 7, the driver perceives complete ignition of the road vehicle 1, starting from the object with which they interact (the optical sensor 9) up to the control panel 18.

As previously mentioned, preferably, the ignition system 6 does not comprise means for sensing the pressure of a pedal, in particular of a brake pedal 23. In this manner, ignition, i.e., enabling power supply to the powertrain system 5, is entirely dependent upon the configuration of the luminous device 7 (and upon the presence of the key in the passenger compartment 3), making the system simple, but comprehensible and reliable at the same time.

According to several non-limiting embodiments, such as those illustrated in the attached figures, the gesture device 7 comprises a frame 22 that surrounds the sensor 9, 9' or 9", preferably at least partially transparent, which is configured to switch (entirely) from the third colour to the fourth colour in switching from a switched-off configuration to a switched-on configuration, i.e., following the first gesture or the second gesture.

Preferably but not in a limiting manner, as illustrated in the non-limiting embodiments of Figures 2 and 3, the first gesture is a clockwise rotation of the driver's hand H (starting from a substantially vertical position in Figure 2, to arrive at a substantially horizontal position in Figure 3).

Preferably but not in a limiting manner, as illustrated in the non-limiting embodiments of Figures 7 and 8, the second gesture is an anti-clockwise rotation of the driver's hand H (starting from a substantially vertical position in Figure 7, to arrive at a substantially horizontal position in Figure 8).

In accordance with what has been said so far, therefore, the luminous device 7 also comprises a display device 27, which is configured to assume at least partially the third colour and the fourth colour according to what has been described previously.

In accordance with what has been said so far, advantageously but not in a limiting manner, the display device 27 is configured to switch from the third colour to the fourth colour when the optical sensor 9 detects the first gesture and vice versa when it detects the second gesture.

In detail, the display device 27 corresponds with the part 17 of the luminous device 7 described above.

According to several preferred embodiments, the display device 27 comprises an electronic ink screen 28. In this manner, it is possible to reduce to a minimum the energy consumption to switch from the third colour to the fourth colour and vice versa.

According to other embodiments not illustrated, the display device 27 comprises a liquid crystal display 28 (for example, LCD or OLED). In this manner, it is possible to increase the luminosity and the flexibility in display of the contents on the screen 28, for example by adding animations.

In use, the driver enters into the passenger compartment with the key on their person, while the luminous device 7 is in the switched-off configuration having the coloured surface (of the third colour, which may also be black or transparent), for example yellow. The vehicle 1 is switched on, i.e., the control unit 11 enables power supply to the powertrain system 5, by operating, i.e., by means of the first gesture (Figures 2 and 3), the gesture device 7.

As soon as the detection system 10 detects the key and the optical sensor 9 detects the first gesture, the switched-on configuration is enabled and is blocked by the locking system 14, part 17 changes colour, for example becomes black, and for example the surface 21 of the steering wheel 20 switches from black to yellow, indicating to the driver that the vehicle is effectively switched on and that it is possible to engage a gear and operate the powertrain system 5. In the same manner, in order to switch off the road vehicle 1, for example when it is in park mode, it is possible to have the optical sensor 9 detect the second gesture in order to switch to the switched-off configuration. As soon as the optical sensor 9 detects the second gesture, the vehicle 1 returns to the switched-off configuration, the gesture device 7 once again assumes, for example thanks to the screen 28 or to one or more LEDs, the colour yellow for example, and the surface 21 of the steering wheel 20 turns black again.

Obviously, the colours indicated are simply examples and can be replaced with other colours. In certain cases, said colours may also be set by the driver, based on their own preferences.

Although the invention described here above makes particular reference to an example of a precise embodiment, it is not to be considered as limited to said example of an embodiment, as its scope includes all those variants, changes or simplifications covered by the attached claims, such as, for example, a different type of road vehicle (such as front-wheel drive), a different shape of the passenger compartment, different locking systems, a different type of screen, etc.

The vehicle and the gesture device described above offer numerous advantages.

In the first place, they allow a simple and immediate indicator of the state of ignition of the vehicle to be provided to the driver.

Furthermore, they allow saving of the charge of the vehicle battery pack when the vehicle is not moving, as it is possible to switch off the vehicle 1.

A further advantage of the present invention resides in the fact that, thanks to the electronic ink screen, visibility of the colour and its opacity is maximised.

In addition, the locking system avoids sudden and involuntary switching off of the road vehicle, thus maintaining appropriate safety.

### LIST OF REFERENCE NUMBERS OF THE FIGURES

- 1: vehicle
- 2: wheels
- 3: passenger compartment
- 4: dashboard
- 5: powertrain system
- 6: ignition system
- 7: gesture device
- 8: gesture detector
- 9: optical sensor
- 10: detection system
- 11: control unit
- 14: locking system
- 15: video camera
- 16: luminous element
- 17: part of the gesture device 7
- 18: control panel
- 19: part of the steering wheel
- 20: steering wheel
- 21: surface
- 22: frame
- 23: brake pedal
- 27: display device
- 28: screen
- 30: vehicle roof
- A: central axis of symmetry
- H: driver's hand

## Claims

1. Road vehicle (1) comprising:
- four wheels (2), of which at least one pair of wheels (2) is driven;
- a passenger compartment (3);
- a powertrain system (5);
- an ignition system (6) of the powertrain system (5) comprising, in turn, a gestural device (7) integral with the passenger compartment (3) of the road vehicle (1) and comprising an optical sensor (9) configured to detect at least a first gesture and a second gesture made by the driver to change from an off configuration to an on configuration of the road vehicle (1) and vice versa;
the ignition system (6) comprising a detection system (10), configured to detect the presence or absence of a key inside the passenger compartment (3), and a control unit (11), which is connected to the detection system (10) and the powertrain system (5) and is configured to enable power to the powertrain system (5) only when the gesture device (7) detects the first gesture performed by the driver.

2. Road vehicle (1) according to claim 1, wherein:
- the gesture device (7) comprises a display device (27) configured to, at least partially, selectively assume a first colour or a second colour;
wherein the display device (27) is configured to switch between the first colour and the second colour when the gesture device (7) detects the first gesture, and vice versa when the gesture device (7) detects the second gesture.

3. Road vehicle (1) according to claim 2, wherein the display device (27) comprises a screen (28).

4. Road vehicle (1) according to claim 1, 2 or 3, wherein the gesture device (7) comprises, in particular is, a gesture detector (8), in particular a camera (15) facing the driver.

5. Road vehicle (1) according to any one of the preceding claims, wherein the first gesture is a clockwise rotation of a hand (H) of the driver, in particular starting from a substantially vertical position, to a substantially horizontal position; and/or wherein the second gesture is a counter clockwise rotation of the hand (H) of the driver, in particular starting from a substantially vertical position, to a substantially horizontal position.

6. Road vehicle (1) according to any one of the preceding claims, wherein the gestural device (7) comprises a locking system (14), which is configured to selectively disable the optical sensor (9) in case the speed of the road vehicle (1) is greater than zero and/or a gear is engaged.

7. Road vehicle (1) according to any one of the preceding claims, and comprising a luminous element (16) inside the passenger compartment (3), which is configured to assume a third colour when the vehicle (1) is in the on configuration and a fourth colour when the vehicle (1) is in the off configuration, the third colour and the fourth colour being different from each other.

8. Road vehicle (1) according to claim 7, wherein the ignition system (6) is configured to emit a signal that causes at least part (17) of the luminous device (7) to change colour.

9. Road vehicle (1) according to claim 7 or 8, wherein the third colour is equal to the second colour and the fourth colour is equal to the first colour.

10. Road vehicle (1) according to claim 7 or 8, wherein the third colour is equal to the first colour and the fourth colour is equal to the second colour.

11. Road vehicle (1) according to any one of claims 7 to 10, wherein the luminous device (16) inside the passenger compartment (3) is a part (19) of the steering (20) wheel, in particular a surface arranged at a front airbag; and/or a part of the dashboard (4) and/or a part of a vehicular roof (30); and/or indirect passenger compartment lighting devices (3).

12. Road vehicle (1) according to any one of the preceding claims, wherein the ignition system (6) does not comprise means for sensing the pressure of a pedal, in particular a brake pedal (23).
